# EUROPÄISCHE PATENTSCHRIFT

(11) **EP 0 875 070 B1**
(45) Veröffentlichungstag und Bekanntmachung des Hinweises auf die Patenterteilung: **29.09.1999**
(21) Anmeldenummer: 96945765.4
(22) Anmeldetag: 23.12.1996
(51) Int. Cl.: H01H 9/02

(54) **ELEKTRISCHER SCHALTER**
ELECTRIC SWITCH
INTERRUPTEUR ELECTRIQUE

(30) Priorität: 19.01.1996 DE 19601775
(43) Veröffentlichungstag der Anmeldung: 04.11.1998
(73) Patentinhaber: EATON CONTROLS GmbH & Co. KG, 55445 Langenlonsheim (DE)
(72) Erfinder: GEPPERT, Michael, D-55411 Bingen (DE)
(74) Vertreter: Becker, Bernd, Dipl.-Ing.
(86) Internationale Anmeldenummer: DE9602505
(87) Internationale Veröffentlichungsnummer: WO9726670

(56) Entgegenhaltungen:
- EP-A- 0 548 477

## Beschreibung

Die Erfindung bezieht sich auf einen elektrischen Schalter zum Öffnen und/oder Schließen einer mit einem Heckscheibenwischer versehenen Heckscheibe eines Kraftfahrzeuges, mit einem in einem Gehäuse angeordneten Bedienelement, durch das ein Kontakte bzw. einen Schaltsensor beaufschlagendes Schaltglied betätigt wird.

Solche Schalter sind aus der Praxis hinreichend bekannt. Sie sind an einer beliebigen Stelle des Kraftfahrzeuges montiert und haben häufig örtlich keinen Bezug zu dem damit aktivierten Bauteil. So läßt sich z.B. bei verschiedenen Kombi-Kraftfahrzeugen neben der Heckklappe auch die Heckscheibe öffnen. Dabei ist auf der Heckscheibe ein Scheibenwischer montiert, der mit der Scheibe verschwenkt werden muß. Weiterhin ist die Heckscheibe mit der Heckklappe verriegelt bzw. an ihr festgelegt. Wenn die Heckscheibe geöffnet werden soll, so muß über einen gesonderten Schalter der Verriegelungsmechanismus geöffnet werden. Der dazu notwendige Schalter ist meist an einem geschützten, von der Heckscheibe beabstandeten Ort untergebracht. In der Regel befindet er sich auch noch an einer nicht einsehbaren Stelle, um das Design des Kraftfahrzeuges durch den Schalter nicht negativ zu beeinflussen. Daher muß der Schalter ertastet werden, wobei sich der den Schalter suchende Bediener verschmutzen kann. Zum Öffnen der Heckscheibe sind hierbei zwei Hände bzw. Handgriffe erfordererforderlich. Mit der einen Hand wird der Schalter gesucht und betätigt, und mit der anderen Hand wird die Heckscheibe geöffnet. Dies geschieht durch das Anfassen der Scheibenwischerachse, welche als Handhabe benutzt wird, und das Verschwenken der Heckscheibe um ihren Drehpunkt. Die Scheibenwischerachse mit ihren Befestigungsmitteln ist als Handhabe sehr ungeeignet. Sie weist einerseits scharfe Kanten auf, an denen sich der Benutzer verletzen kann, und andererseits ist sie sehr stark verschmutzt, teilweise sogar mit Fett. Bei der Anbringung des Schalters nach dem Stand der Technik ist außerdem noch ein erhöhter Aufwand für die Verkabelung erforderlich. Dies rührt daher, daß neben den Leitungen zum Scheibenwischermotor noch gesonderte Leitungen erforderlich sind, die an den abseits liegenden Ort des Schalters geführt werden müssen. Dies führt zwangsläufig zu erhöhten Kosten.

Der Erfindung liegt die Aufgabe zugrunde, einen elektrischen Schalter der eingangs genannten Art zu schaffen, der an seinem Einsatzort und den Verwendungszweck angepaßt und in seinem Gesamtaufbau einfach und kostengünstig ist.

Diese Aufgabe wird erfindungsgemäß dadurch gelöst, daß
- an dem Gehäuse ein Ansatz mit einem Positionierelement angeformt ist, das in eine korrespondierende Öffnung der Heckscheibe eingreift,
- an dem Gehäuse eine vom Ansatz unter Bildung eines Freiraumes beabstandete Kappe angeordnet ist, und
- die Wischerachse des Heckscheibenwischers sich durch den Ansatz in die Kappe erstreckt.

Durch das Anbringen des Ansatzes ist der Schalter an den jeweiligen Einsatzort anpaßbar. Die weiterhin angebrachte Kappe überdeckt außerdem die im Freiraum vorhandenen technischen Verbindungsmittel, diee das ästhetische Äußere negativ beeinflussen würden. In der Kappe und im Ansatz sind die entsprechenden Elemente für die Position des Schalters eingearbeitet, über die eine sichere und fehlerfreie Montage möglich ist. Durch das beabstandete Vorhandensein von der als Griff dienenden Kappe und Ansatz ist der elektrische Schalter in der Lage, auf ihn einwirkende Drehmomente weiterzuleiten, wodurch kein weiterer zusätzlicher Griff mehr erforderlich ist.

Nach einer vorteilhaften Ausgestaltung der Erfindung umfaßt das Positionierelement des Ansatzes eine eine Lagerbohrung und einen Verdrehschutz aufweisende Hülse, an der sich in Richtung zur Kappe eine Schulter erstreckt, über die der Schalter axial gehalten wird. Durch diese Maßnahme ist der Schalter in allen Richtungen fixiert. Der Schalter hat somit zur Umgebung immer eine ausgerichtete Lage, wobei die für die Lage verantwortlichen Formelemente einfach herstellbar sind.

Damit über die Kappe eine weitere genaue Zuordnung zum Befestigungselement erfolgt, und somit über die Kappe der Schalter doppelt in seiner Lage fixiert ist, was einer äußerst sicheren Befestigung gleichkommt, ist nach einer vorteilhaften Weiterbildung der Erfindung das Lageelement der Kappe eine Buchse, in die ein Formelement eines den Schalter haltenden Elementes eintaucht.

Zweckmäßigerweise sind das Positionierelement des Ansatzes und das Lageelement der Kappe koaxial zueinander ausgerichtet, wobei an dem durch die Lagerbohrung ragenden, den Schalter haltenden Element ein in das Lageelement eingreifender Vorsprung vorgesehen ist. Der sich daraus ergebende Vorteil liegt in der Herstellung der den Schalter haltenden Elemente, die als drehsymetrische Teile besonders wirtschaftlich und dabei genau herstellbar sind.

Mit Hilfe des Gehäuses des Schalters soll ein anderes Element, insbesondere die Heckscheibe eines Kraftfahrzeuges, um einen Drehpunkt geschwenkt werden. Dazu soll der Schalter einen längeren Teil besitzen, der dem Benutzer gut in der Hand bzw. in den Fingern einer das Gehäuse umschließenden Hand liegt. Nach einer vorteilhaften Ausführungsform ist daher das Gehäuse des Schalters im Querschnitt L-förmig ausgestaltet, wobei ein Schenkel des L-förmigen Gehäuses annähernd parallel zu einer durch das Lageelement und das Positionierelement verlaufenden Achse vorliegt.

Nach einer weiteren vorteilhaften Ausgestaltung der Erfindung ist das Bedienelement in dem von der Achse wegweisenden Schenkel des L-förmigen Gehäuses angeordnet, wobei eine Bedienachse annähernd parallel zu der durch das Lageelement und das Positionierelement verlaufenden Achse vorliegt. Somit ist die Bedienrichtung des Schalters gleich der Abheberichtung, z.B. der Heckscheibe, wodurch der Benutzer zum Bedienen des Schalters und zum Öffnen der Heckscheibe nur eine Bewegung durchführen muß. Das Bedienelement liegt somit direkt im Eingriff des Benutzers beim Anfassen der Handhabe zum Öffnen der Heckscheibe.

Das Schaltergehäuse soll steif und formstabil ausgeführt sein damit es beim Verschwenken, z.B. der Heckscheibe, sich nicht verformt und die Schaltfunktion beeinträchtigt. Um dies zu gewährleisten, ist bevorzugt die Kappe an beiden Schenkeln des L-förmigen Gehäuses mit Befestigungselementen gehalten, wobei ein das Lageelement aufweisender Kappenfortsatz sich entgegen dem das Bedienelement tragenden Schenkels des Gehäuses in Richtung der Achse erstreckt.

Bei der Unterbringung des elektrischen Schalters an der Außenhaut des Kraftfahrzeuges dringt sehr leicht Feuchtigkeit in das Innere des Gehäuses, wodurch die elektrische Qualität der Schaltung beeinträchtigt wird. Da im Heckbereich eines Fahrzeuges je nach Fahrzustand ein unterschiedlicher Luftdruck herrscht, begünstigt dies auch das Eindringen der Feuchtigkeit in einen Schalter. Daher ist zweckmäßigerweise das Schalterinnere dicht verschlossen, wobei eine am Gehäuse angespritzt, am Bedienelement anliegende Membran und ein die Gehäuseöffnung abschließender Deckel vorgesehen sind. Um eine absolut dichte Verbindung zu erhalten, ist bevorzugt der Dekkel mit dem Gehäuse durch eine Schweißverbindung verbunden, was eine kostengünstige und auch automatisierbare Herstellung ermöglicht.

Da teilweise hohe Kräfte auf das Bedienelement und somit das Schaltelement wirken, ist dieses vor Überlastung zu schützen. Nach einer Weiterbildung der Erfindung wirkt daher das vom Bedienelement beaufschlagte Schaltglied auf einen mit einem elastischem Puffer belegten Schaltsensor. Hierbei ist keine große Montagegenauigkeit erforderlich. Die einwirkenden Schaltkräfte werden über die gesammte Fläche des elastischen Puffers verteilt, womit eine große Schaltsicherheit des Schaltsensor sichergestellt wird.

Der Schaltsensor soll auch bei ungenauer Belastung durch das Schaltglied bzw. durch das Bedienungselement sicher ansprechen und schalten, wodurch eine übermäßige Zugbelastung einerseits auf das Gehäuse des Schalters und andererseits auf das zu verstellende Element vermieden wird. Daher weist nach einer weiteren Ausgestaltung der Schaltsensor im unbelasteten Zustand einen hohen Widerstand auf, der bei Belastung schlagartig abfällt.

Weiterhin ist bevorzugt vorgesehen, daß der Schalter selbsttätig rückstellt, das Schaltglied drehbar über ein Lager im Gehäuse gehaltert ist, und im Schaltglied eine federnde Druckhülse gegenüber dem Lager eingesetzt ist, die mit einer im Deckel vorhandenen Schaltkulisse zusammenwirkt. Durch diese Ausgestaltung geht nach dem Loslassen des Schalters das zu verstellende Element, z.B. die Heckscheibe wieder in die sichere, verriegelte Position über. Die dazu benutzten Einzelteile sind bewährt und sicher in ihrer Funktion, wobei sie außerdem noch preiswert sind.

Damit das vom Schaltsensor erzeugte Signal soll zur Verarbeitung und Nutzung weitergeleitet werden kann, geht zweckmäßigerweise mindestens eine Leitung vom Schaltsensor ab, die vom Gehäuse (12) umspritzt ist, wobei die Leitung im Bereich des Ansatzes aus dem Gehäuse herausragt. Durch das Umspritzen der Leitung ist zum einen die Verbindung vollkommen dicht und zum anderen stellt das Umspritzen gleichzeitig eine Zugentlastung der Leitung dar. Da die Leitung außerdem im Bereich des Ansatzes aus dem Gehäuse heraustritt, ist sie vor aüßeren mechanischen Einflüssen geschützt.

Um das Eindringen von Feuchtigkeit in das Bauteil zu vermeiden, an dem der Schalter anliegt, ist nach einer weiteren Ausgestaltung im Ansatz eine umlaufende Dichtung eingesetzt, die beim Anpressen des Ansatzes auf eine Fläche auch den Bereich der aus dem Gehäuse ragenden Leitung umschließt.

Bei der Benutzung des Gehäuses des Schalters als Handhabe zum Verschwenken eines Elementes soll dieses steif sein. Daher sind bevorzugt der Ansatz und die Kappe mit Versteifungsrippen versehen. So läßt sich darüber hinaus eine kostengünstige Fertigung erreichen, bei der das ästhetische Aussehen des Schalters nicht durch Einfallstellen gemindert wird.

Der der Erfindung zugrunde liegende Gedanke wird in der nachfolgenden Beschreibung anhand eines Ausführungsbeispieles, das in der Zeichnung dargestellt ist, näher erläutert. Es zeigen:
- Fig. 1: eine Schnittansicht durch einen Einbauort mit einem erfindungsgemäßen Schalter,
- Fig. 2: eine vergrößerte Darstellung der Einzelheit II gemäß Fig. 1,
- Fig. 3: eine vergrößerte, gedreht gezeichnete Schnittdarstellung durch den Schalter nach Fig. 2 im unbetätigten Zustand,
- Fig. 4: eine Ansicht in Pfeilrichtung IV gemäß Fig. 3,
- Fig. 5: eine Schnittansicht gemäß Fig. 3 im betätigten Zustand des Schalters und
- Fig. 6: einen Schnitt durch den Schalter gemäß Fig. 3 entlang der Linie VI-VI.

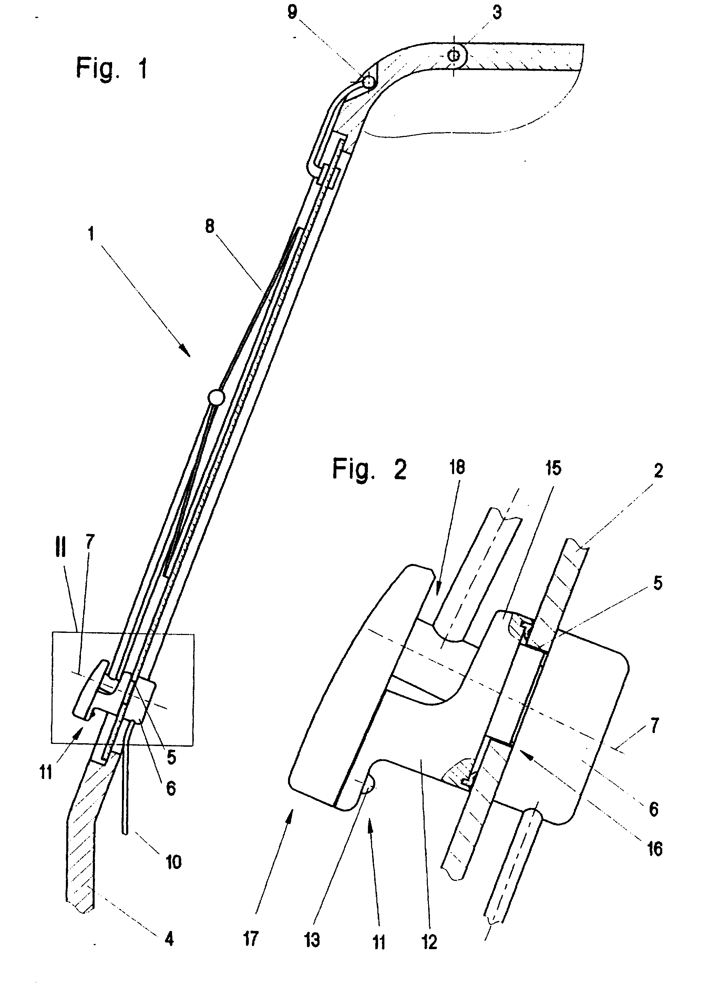

Auf der Heckscheibe eines Kombi-Kraftfahrzeuges ist gemäß Fig. 1 ein Heckscheibenwischer 1 angeordnet. Der Heckscheibenwischer 1 und die Heckscheibe befinden sich dabei an einer um einen Drehpunkt 3 verschwenkbaren Hecktür 4. Für die Montage des Heckscheibenwischers 1 ist eine Öffnung 5 in die Heckscheibe 2 eingelassen. Auf der Innenseite der Heckscheibe 2 befindet sich ein Wischermotor 6, von dem eine Zuleitung 10 abgeht. An einer Wischerachse 7 ist ein Wischerblatt 8 angeordnet. Die Heckscheibe 2 selbst ist an der Hecktür 4 um eine Schwenkachse 9 verschwenkbar gelagert. Die Befestigung des Heckscheibenwischers geschieht über an der Wischerachse 7 vorhandene Spannmittel (nicht dargestellt), mit denen zwischen der Wischerachse 7 und dem Wischermotor 6 die Heckscheibe 2 unter Zwischenschaltung von Distanzringen 46 eingespannt ist. Soll nun die Heckscheibe 2 geöffnet werden, so muß die Heckscheibenverriegelung geöffnet und eventuell auch der Heckscheibenwischer 1 ausgeschaltet werden. Damit diese Funktionen ausgelöst bzw. gestoppt werden können, ist an der Wischerachse ein Schalter 11 angebracht. Der Schalter besitzt ein Gehäuse 12, in dem unter anderem ein Bedienelement 13 und ein Kontakte bzw. einen Schaltsensor beaufschlagendes Schaltglied 14 vorhanden sind.

Am Gehäuse 12 des Schalters 11 ist ein Ansatz 15 angeformt, der nahezu rechtwinklig zur Wischerachse 7 ausgerichtet ist und ein Positionierelement 16 in Form einer Hülse 56 besitzt, die mit einer Lagerbohrung 21 die Wischerachse 7 umgreift. Beabstandet von dem Ansatz 15 ist am Gehäuse 12 eine Kappe 17 angegeordnet, die parallel zum Ansatz 15 ausgerichtet ist. Im Bereich der Wischerachse 7 ist zwischen der Kappe 17 und dem Ansatz 15 ein Freiraum 18 vorhanden. In dem Freiraum 18 ist die Wischerachse 7 sichtbar. In der Kappe 17 ist zum Freiraum 18 hin ein Lageelement 19 eingelassen, das die Form einer Buchse 20 besitzt, in die ein an der Wischerachse 7 angeordnetes Formelement eintaucht. Das in die Buchse 20 eintauchende Formelement fixiert somit den Schalter 11 in seiner Lage. Es ist ein zweiter Abstützpunkt vorhanden wodurch die einwirkenden Drehmomente besser übertragen werden können.

Das Positionierelement 16 des Ansatzes 15 ist koaxial zum Lageelement 19 der Kappe 17 ausgerichtet, so daß diese Elemente auch in Übereinstimmung mit der Wischerachse 7 sind. Weiterhin ist das Positionierelement 16 und das Lageelement 19 zueinander ausgerichtet, d.h. ihre Wirkflächen liegen in Richtung des Freiraumes 18. Zum Befestigen des Schalters 11 wird dieser mit der Lagerbohrung 21 des Ansatzes 15 auf die Wischerachse 7 aufgeschoben, wobei der Verdrehschutz 22 in Wirkeingriff mit einem entsprechendem Ansatz (nicht dargestellt) kommt. Mit einem Befestigungselement, das an der Schulter 57 des Ansatzes 15 zur Anlage kommt wird der Schalter 11 nun festgelegt. Bei nur dieser Festlegung würde der Schalter 11 sich bei der Handhabung verbiegen. Um dies zu vermeiden, ist in der Verlängerung der Wischerachse 7 ein Vorsprung vorhanden, der in das Lageelement 19 der Kappe 15 eingreift und für eine ausreichende Stabilität sorgt.

In seiner Hauptausdehnung weist das Gehäuse 12 des Schalters 11 einen L-förmigen Querschnitt auf. Der etwas längere Schenkel 23 liegt annähernd parallel zur Wischerachse 7 vor Der kürzere Schenkel 24 ist senkrecht zum längeren Schenkel 23 ausgerichtet und weist von der Wischerachse 7 weg. Quer zu diesen Ausrichtungen hat das Gehäuse 12 einen nahezu rechtekkigen Querschnitt. In dem kürzeren Schenkel 24 ist eine Tastenöffnung 25, aus der das Bedienelement 13 herausragt. Die Tastenöffnung 25 befindet sich dabei im Winkel zwischen dem langen Schenkel 23 und dem kurzen Schenkel 24. Das Bedienelement 13 ist am Schaltglied 14 befestigt, dessen Drehpunkt 26 im Bereich des langen Schenkels 23 liegt. Durch diese Anordnung ergibt sich eine annähernd parallele Ausrichtung der Bedienachse 27 zur Wischerachse 7.

Die Kappe 17 ist an beiden Schenkeln 23, 24 des Gehäuses 12 befestigt. Entsprechend lange Fortsätze 28 sind an der Kappe 17 angespritzt, die parallel zu den Schenkeln 23, 24 des Gehäuses 12 verlaufen. Am kurzen Schenkel 24 ist eine Klipsverbindung 29 und am langen Schenkel 23 eine Schraubverbindung 30 angeordnet, mit denen Kappe 17 und Gehäuse 12 verbunden sind. Für die Schraubverbindung 30 ist in einem Fortsatz 28 eine Gewindemuffe 31 eingebettet mit der die Schraube 32 die Schraubverbindung 30 eingeht. Die Kappe 17 erstreckt sich über die Länge des Schenkels 24 und hat einen das Lageelement 19 aufnehmenden Kappenfortsatz 33, der sich bis über die Wischerachse 7 erstreckt.

Das Schalterinnere 34 ist dicht verschlossen. Eine eingespritzte Membran 35 liegt formschlüssig am Bedienelement 13 an und dichtet das Gehäuse 12 von dieser Seite ab. An der Bestückungsseite des Schalters 11 ist eine Gehäuseöffnung 36 vorhanden, die mit einem Deckel 37 verschlossen ist. Der Dekkel 37 und das Gehäuse 12 sind durch eine Elektro-Wider-stands-Schweißung miteinander verschweißt. Für den Schweißvorgang ist ein metallischer umlaufender Schweißring 38 vorgesehen.

Im Schalterinnern 34 befindet sich ein Schaltsensor 39, der aus einer Schaltmatte 40 und einem Schatteil 41 besteht. Der Schaltteil 41 ist im langen Schenkel 23 des Gehäuses 12 untergebracht, von dem aus sich die Schaltmatte 39 erstreckt, die im Eckbereich zwischen den Schenkel 23, 24 umgebogen ist und an der Innenseite des Deckels 37 anliegt. Auf der dem Deckel 37 abgewandten Seite der Schaltmatte 40 ist ein elastischer Gummipuffer 42 aufgeklebt. Wenn bei Betätigung des Bedienelementes 13 das Schaltglied 14 mit seiner Druckkalotte 43 den Gummipuffer 42 beaufschlagt, fällt der Widerstand im Schaltsensor 39 schlagartig ab, und die Verriegelung der Heckscheibe 2 wird deaktiviert.

Im Schaltglied 14 ist eine federnde Druckhülse 44 in einer Hülsenbohrung 45 eingesetzt. Die federnde Ausrichtung der Druckhülse 44 ist entgegen dem Drehpunkt 26 und im rechten Winkel zur Bedienachse 27 festgelegt. Dabei stützt die Dreckhülse 44 sich am Boden der Hülsenbohrung 45 ab. Am Deckel 37 befindet sich ein Schaltkulissenansatz 47, der in das Schalterinnere 34 eintaucht und im Bereich der Druckhülse 44 vorliegt. Eine im Schaltkulissenansatz 47 eingearbeitete Schaltkulisse 48 besitzt eine Ruhestellung 49 und eine Rückstellflanke 50. Zwei Leitungen 51 gehen vom Schaltsensor 39 ab und verlaufen rechts und links neben der Schraubverbindung 30 durch den langen Schenkel 23 des Gehäuses 12. Die Leitungen 51 werden bei der Herstellung des Gehäuses 12 vom Kunststoff umspritzt. Ihre Oberfläche ist daher mit dem Kunststoff verschmolzen, wodurch sich eine dichte Einbettung ergibt, die gleichzeitig eine Zugentlastung für die Leitungen 51 darstellt. Die Leitungen 51 ragen im Bereich des Ansatzes 15 aus dem Gehäuse 12 heraus und werden über die Öffnung 5 in der Heckscheibe 4 nach innen geführt. Zur Vermeidung des Eindringens von Schmutz und Feuchtigkeit ist am Ansatz 15 in einer umlaufenden Nut 52 eine umlaufende Dichtung 53 eingesetzt. Die Dichtung 53 stützt sich beim Befestigen des Schalters 11 mit ihren Dichtlippen 54 an der Heckscheibe 2 ab und gewährleistet eine dichte Verbindung zwischen dem Ansatz 15 des Schalters 11 und der Heckscheibe 2. Alle für die Festigkeit notwendigen Wände vom Ansatz 15 als auch von der Kappe 17 sind kräftig ausgelegt und besitzen außerdem Versteifungsrippen 55 die dem Ansatz 15 mit seinem Positionierelement 16 und der Kappe 17 mit ihrem Lageelement 19 zusätzliche Steifigkeit geben.

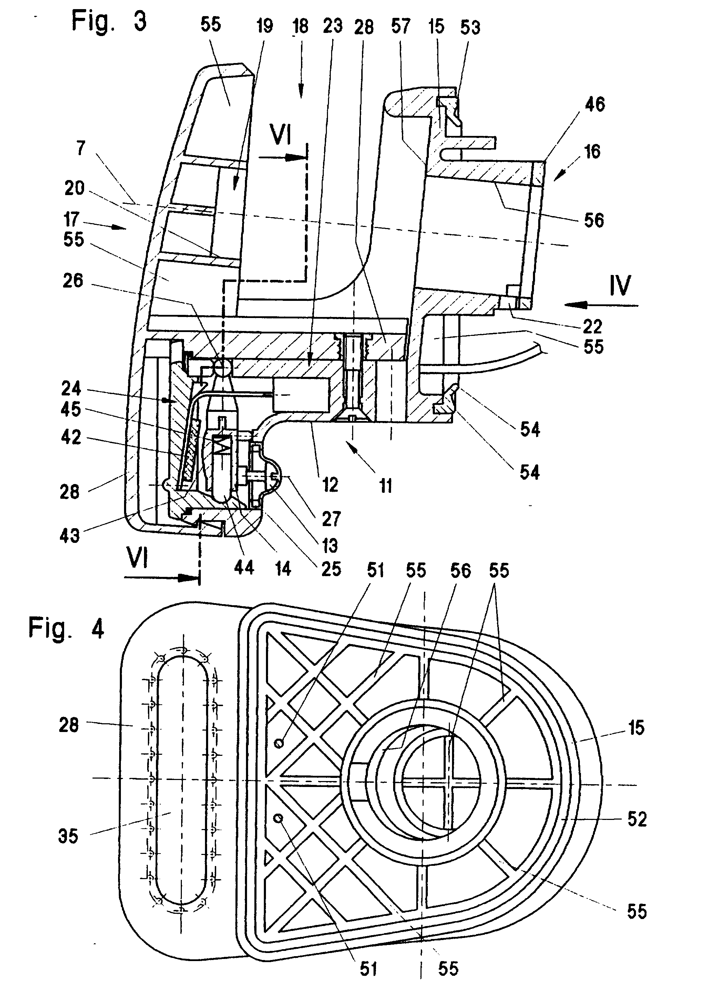

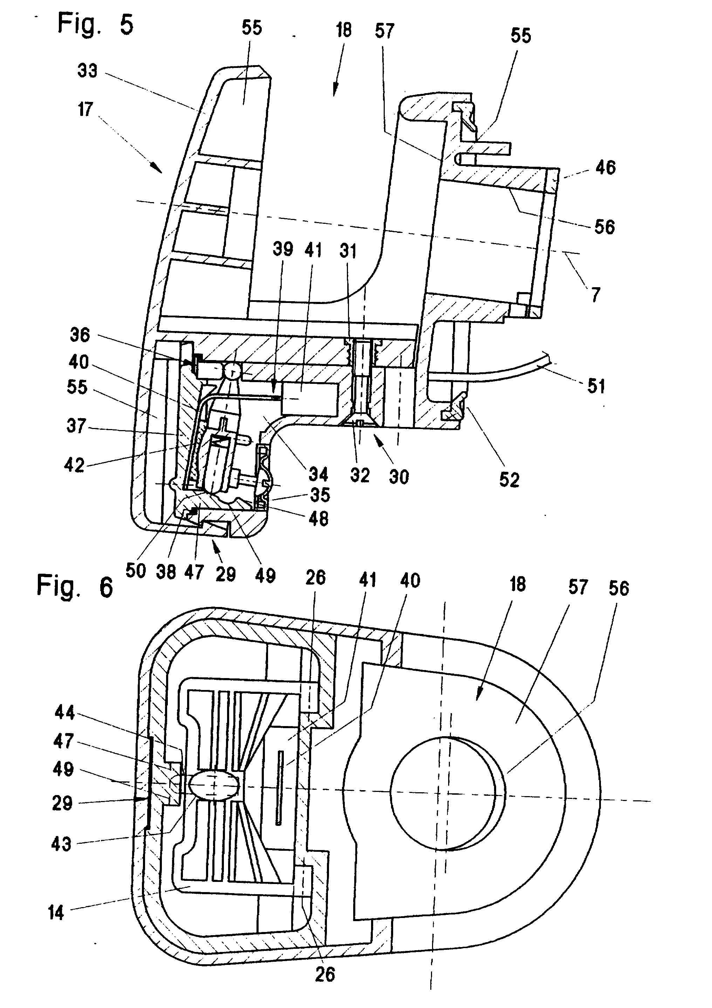

Nachfolgend wird der Ablauf für die Benutzung des Schalters 11 näher beschrieben. Die Ausgangssituation ist in der Fig. 3 dargestellt. Der Schalter 11 wird in die Hand genommen, wobei die Finger am Bedienelement 13 am kurzen Schenkel 24 angreifen und der Daumen sich auf der Kappe 17 im Bereich der Wischerachse 7 abstützt. Sobald Kraft auf das Bedienelement 13 ausgeübt wird, wandert dieses und das Schaltglied 14 in das Schalterinnere 34. Dabei gleitet die im Schaltglied 14 eingesetzte, federnde Druckhülse 44 aus der Ruhestellung 49 die Rückstellflanke 50 hinauf. Mit der Druckkalotte 43 wird der Schaltsensor 39 betätigt und die Schaltung aktiviert, d.h. die Verriegelung der Heckscheibe 2 gelöst (sh. Fig. 5). Mit dem Schalter 11 als Handhabe wird danach die Heckscheibe 2 um ihre Schwenkachse 9 verschwenkt. Nach dem Zurückschwenken der Heckscheibe 2 wird der Schalter 11 freigegeben. Unter der Wirkung der federnden Druckhülse 44 im Zusammenspiel mit der Rückstellflanke 50 der Schaltkulisse 48 wandert das Schaltglied 14 und somit das Bedienelement 13 in seine Ruhestellung 49. Dabei entfällt die Druckbeaufschlagung des Schaltsensors 39, und die Heckscheibe 2 wird wieder verriegelt. Über logische Verknüpfungen mit der Kraftfahrzeugelektronik bzw. -elektrik ist die Entriegelung der Heckscheibe 2 nur bei gestecktem Zündschlüssel im Zündschloß oder eingestecktem Schlüssel in der Hecktür 4 möglich.

## Patentansprüche

1. Elektrischer Schalter zum Öffnen und/oder Schließen einer mit einem Heckscheibenwischer (1) versehenen Heckscheibe (2) eines Kraftfahrzeuges, mit einem in einem Gehäuse (12) angeordneten Bedienelement (13), durch das ein Kontakte bzw. einen Schaltsensor (39) beaufschlagendes Schaltglied (14) betätigt wird,
dadurch gekennzeichnet, daß
- an dem Gehäuse (12) ein Ansatz (15) mit einem Positioniere!ement (16) angeformt ist, das in eine korrespondierende Öffnung (5) der Heckscheibe (2) eingreift,
- an dem Gehäuse (12) eine vom Ansatz (15) unter Bildung eines Freiraumes (18) beabstandete Kappe (17) angeordnet ist und
- die Wischerachse (7) des Heckscheibenwischers (1) sich durch den Ansatz (15) in die Kappe (17) ersteckt.

2. Elektrischer Schalter nach Anspruch 1, dadurch gekennzeichnet, daß das Positionierelement (16) des Ansatzes (15) eine eine Lagerbohrung (21) und einen Verdrehschutz (22) aufweisende Hülse (56) umfaßt, an der sich in Richtung zur Kappe (17) eine Schulter (57) erstreckt über die der Schalter (11) axial gehalten wird.

3. Elektrischer Schalter nach Anspruch 1 oder 2, dadurch gekennzeichnet, daß das Lageelement (19) der Kappe (17) eine Buchse (20) ist, in die ein Formelement eines den Schalter (11) haltenden Elementes eintaucht.

4. Elektrischer Schalter nach einem der Ansprüche 1 bis 3, dadurch gekennzeichnet, daß das Positionierelement (16) des Ansatzes (15) und das Lageelement (19) der Kappe (17) koaxial zueinander ausgerichtet sind, wobei an dem durch die Lagerbohrung (21) ragenden, den Schalter (11) haltenden Element ein in das Lageelement (19) eingreifender Vorsprung vorgesehen ist.

5. Elektrischer Schalter nach einem der Ansprüche 1 bis 4, dadurch gekennzeichnet, daß das Gehäuse (12) des Schalters (11) im Querschnitt L-förmig ausgestaltet ist, wobei ein Schenkel (23) des L-förmigen Gehäuses (12) annähernd parallel zu einer durch das Lageelement (19) und das Positionierelement (16) verlaufenden Achse (7) vorliegt.

6. Elektrischer Schalter nach einem der Ansprüche 1 bis 5, dadurch gekennzeichnet, daß das Bedienelement (13) in dem von der Achse (7) wegweisenden Schenkel (24) des L-förmigen Gehäuses (12) angeordnet ist, wobei eine Be dienachse (27) annähernd parallel zu der durch das Lageelement (19) und das Positionierelement (16) verlaufenden Achse (7) vorliegt.

7. Elektrischer Schalter nach einem der Ansprüche 1 bis 6, dadurch gekennzeichnet, daß die Kappe (17) an beiden Schenkeln (23, 24) des L-förmigen Gehäuses (12) mit Befestigungselementen (29, 30) gehalten ist, wobei ein das Lageelement (19) aufweisender Kappenfortsatz (33) sich entgegen dem, das Bedienelement (13) tragenden Schenkel (24) des Gehäuses (12) in Richtung der Achse (7) erstreckt.

8. Elektrischer Schalter nach einem der Ansprüche 1 bis 7, dadurch gekennzeichnet, daß das Schalterinnere (34) dicht verschlossen ist, wobei eine am Gehäuse (12) angespritzt, am Bedienelement (13) anliegende Membran (35) und ein die Gehäuseöffnung (36) abschließender Deckel (37) vorgesehen sind.

9. Elektrischer Schalter nach Anspruch 8, dadurch gekennzeichnet, daß der Deckel (37) mit dem Gehäuse (12) durch eine Schweißverbindung verbunden ist.

10. Elektrischer Schalter nach einem der Ansprüche 1 bis 9, dadurch gekennzeichnet, daß das vom Bedienelement (13) beaufschlagte Schaltglied (14) auf einen mit einem elastischen Puffer (42) belegten Schaltsensor (39) wirkt.

11. Elektrischer Schalter nach Anspruch 10, dadurch gekennzeichnet,daß der Schaltsensor (39) im unbelasteten Zustand einen hohen Widerstand aufweist, der bei Belastung schlagartig abfällt.

12. Elektrischer Schalter nach einem der Ansprüche 1 bis 11, dadurch gekennzeichnet, daß der Schalter (11) selbsttätig rückstellt, das Schaltglied (14) drehbar über ein Lager (26) im Gehäuse (12) gehaltert ist, und im Schaltglied (14) eine federnde Drückhülse (44) gegenüber dem Lager (26) eingesetzt ist, die mit einer im Deckel (37) vorhandenen Schaltkulisse (48) zusammenwirkt.

13. Elektrischer Schalter nach einem der Ansprüche 10 bis 12, dadurch gekennzeichnet, daß mindestens eine Leitung (51) vom Schaltsensor (39) abgeht, die vom Gehäuse (12) umspritzt ist, wobei die Leitung (51) im Bereich des Ansatzes (15) aus dem Gehäuse (12) herausragt.

14. Elektrischer Schalter nach einem der Ansprüche 1 bis 13, dadurch gekennzeichnet, daß im Ansatz (15) eine umlaufende Dichtung (53) eingesetzt ist, die beim Anpressen des Ansatzes (15) auf eine Fläche auch den Bereich der aus dem Gehäuse (12) ragenden Leitung (51) umschließt.

15. Elektrischer Schalter nach einem der Ansprüche 1 bis 14, dadurch gekennzeichnet, daß der Ansatz (15) und die Kappe (17) mit Versteifungsrippen (55) versehen sind.

## Claims

1. Electric switch for opening and/or closing a rear windscreen (2) of an automotive vehicle, such windscreen being provided with a rear windscreen wiper (1), said switch having a control element (13) which is disposed in a housing (12) and by means of which a switching member (14) is actuated, said switching member acting on a contact or a switching sensor (39), characterised in that
- an extension member (15) is integrally formed on the housing (12) and has a positioning element (16) which engages in a corresponding opening (5) of the rear windscreen (2),
- a cap (17) is disposed on the housing (12) and is spaced from the extension member (15) so as to form a gap (18), and
- the wiper axis (7) of the rear windscreen wiper (1) extends into the cap (17) through the extension member (15).

2. Electric switch according to claim 1, characterised in that the positioning element (16) of the extension member (15) includes a sleeve (56), which has a bearing bore (21) and a twist-preventing means (22), a shoulder (57) extending at said sleeve in the direction towards the cap (17), and via which shoulder the switch (11) is axially retained.

3. Electric switch according to claim 1 or 2, characterised in that the bearing element (19) of the cap (17) is a bush (20), into which a shaped element of an element retaining the switch (11) extends.

4. Electric switch according to one of claims 1 to 3, characterised in that the positioning element (16) of the extension member (15) and the bearing element (19) of the cap (17) are orientated coaxially relative to each other, a projection member being provided on the element protruding through the bearing bore (21) and retaining the switch (11), and said projection member engaging in the bearing element (19).

5. Electric switch according to one of claims 1 to 4, characterised in that the housing (12) of the switch (11) has an L-shaped configuration, one portion (23) of the L-shaped housing (12) being provided approximately parallel to an axis (7), which extends through the bearing element (19) and the positioning element (16).

6. Electric switch according to one of claims 1 to 5, characterised in that the control element (13) is disposed in the portion (24) of the L-shaped housing (12) pointing away from the axis (7), a control axis (27) being provided approximately parallel to the axis (7), which extends through the bearing element (19) and the positioning element (16).

7. Electric switch according to one of claims 1 to 6, characterised in that the cap (17) is retained on both portions (23, 24) of the L-shaped housing (12) by means of securing elements (29, 30), a cap projection (33) having the bearing element (19) and extending in the direction of the axis (7) in opposition to the portion (24) of the housing (12) provided with the control element (13).

8. Electric switch according to one of claims 1 to 7, characterised in that the switch interior (34) is tightly sealed, a diaphragm (35) and a cover (37) being provided, said diaphragm being injection-moulded on the housing (12) and abutting against the control element (13), and said cover sealing the housing opening (36).

9. Electric switch according to claim 8, characterised in that the cover (37) is connected to the housing (12) by means of a welded joint.

10. Electric switch according to one of claims 1 to 9, characterised in that the switching member (14), which is acted upon by the control element (13), acts on a switching sensor (39) covered with a resilient buffer (42).

11. Electric switch according to claim 10, characterised in that, in the unloaded state, the switching sensor (39) has a high resistance which suddenly decreases during loading.

12. Electric switch according to one of claims 1 to 11, characterised in that the switch (11) resets automatically, the switching member (14) is rotatably mounted in the housing (12) via a bearing (26) , and a resilient compressible sleeve (44) is inserted in the switching member (14) opposite the bearing (26) , said sleeve co-operating with a switching slide (48), which is provided in the cover (37).

13. Electric switch according to one of claims 10 to 12, characterised in that at least one line (51) departs from the switching sensor (39) and is injection-moulded around by the housing (12), the line (51) protruding from the housing (12) in the region of the extension member (15).

14. Electric switch according to one of claims 1 to 13, characterised in that a circumferential seal (53) is inserted in the extension member (15) and also surrounds the region of the line (51), which protrudes from the housing (12), when the extension member (15) is pressed onto a face.

15. Electric switch according to one of claims 1 to 14, characterised in that the extension member (15) and the cap (17) are provided with reinforcing ribs (55).

## Revendications

1. Interrupteur électrique pour l'ouverture et/ou la fermeture d'une vitre arrière (2) d'un véhicule automobile pourvue d'un essuie-glace arrière (1), comportant un élément de commande (13), disposé dans un boîtier (12), par lequel est actionné un organe de commutation (14) agissant sur des contacts ou sur un capteur de commutation (39),
caractérisé en ce que
- sur le boîtier (12) est formé un appendice (15) avec un élément de positionnement (16), qui s'engage dans une ouverture (5) correspondante de la vitre arrière (2),
- sur le boîtier (12) est disposé un capuchon (17) espacé de l'appendice (15) en formant un espace libre (18) et
- l'axe (7) de l'essuie-glace (1) de la vitre arrière s'étend à travers l'appendice (15) dans le capuchon (17).

2. Interrupteur électrique selon la revendication 1, caractérisé en ce que l'élément de positionnement (16) de l'appendice (15) comprend un manchon (56) présentant un perçage d'appui (21) et une protection contre la rotation (22), sur lequel s'étend, en direction du capuchon (17), un épaulement (57) par lequel l'interrupteur (11) est maintenu axialement.

3. Interrupteur électrique selon la revendication 1 ou 2, caractérisé en ce que l'élément de position (19) du capuchon (17) est une douille (20), dans laquelle pénètre un élément profilé d'un élément maintenant l'interrupteur (11).

4. Interrupteur électrique selon l'une des revendications 1 à 3, caractérisé en ce que l'élément de positionnement (16) de l'appendice (15) et l'élément de position (19) du capuchon (17) sont orientés coaxialement entre eux, une saillie, qui s'engage dans l'élément de position (19), étant prévue sur l'élément maintenant l'interrupteur (11), traversant le perçage d'appui (21).

5. Interrupteur électrique selon l'une des revendications 1 à 4, caractérisé en ce que le boîtier (12) de l'interrupteur (11) a une section transversale en L, une branche (23) du boîtier (12) en L étant approximativement parallèle à un axe (7) passant par l'élément de position (19) et l'élément de positionnement (16).

6. Interrupteur électrique selon l'une des revendications 1 à 5, caractérisé en ce que l'élément de commande (13) est disposé dans la branche (24), s'éloignant de l'axe (7), du boîtier (12) en forme de L, un axe de commande (27) étant approximativement parallèle à l'axe (7) passant par l'élément de position (19) et l'élément de positionnement (16).

7. Interrupteur électrique selon l'une des revendications 1 à 6, caractérisé en ce que le capuchon (17) est maintenu aux deux branches (23, 24) du boîtier (12) en forme de L par des éléments de fixation (29, 30), un prolongement de capuchon (33), présentant l'élément de position (19), s'étendant suivant l'axe (7) dans le sens contraire à la branche (24) du boîtier (12) portant l'élément de commande (13).

8. Interrupteur électrique selon l'une des revendications 1 à 7, caractérisé en ce que l'intérieur (34) de l'interrupteur est hermétiquement fermé, une membrane (35) venue de moulage par injection sur le boîtier (12), s'appliquant contre l'élément de commande (13), et un couvercle (37) fermant l'ouverture (36) du boîtier étant prévus.

9. Interrupteur électrique selon la revendication 8, caractérisé en ce que le couvercle (37) est assemblé au boîtier (12) par un assemblage soudé.

10. Interrupteur électrique selon l'une des revendications 1 à 9, caractérisé en ce que l'organe de commutation (14), sollicité par l'élément de commande (13), agit sur un capteur de commutation (39) équipé d'un tampon élastique (42).

11. Interrupteur électrique selon la revendication 10, caractérisé en ce que le capteur de commutation (39) à l'état déchargé présente une grande résistance, qui diminue par à-coups sous charge.

12. Interrupteur électrique selon l'une des revendications 1 à 11, caractérisé en ce que l'interrupteur (11) se replace automatiquement, l'organe de commutation (14) est maintenu tournant dans le boîtier (12) par l'intermédiaire d'un palier (26), et dans l'organe de commutation (14) est inséré un manchon de pression (44) élastique par rapport au palier (26), qui coopère avec une coulisse de commutation (48) se trouvant dans le couvercle (37).

13. Interrupteur électrique selon l'une des revendications 10 à 12, caractérisé en ce qu'au moins une ligne (51), qui est enrobée par le boîtier (12), part du capteur de commutation (39), la ligne (51) ressortant du boîtier (12), dans la région de l'appendice (15).

14. Interrupteur électrique selon l'une des revendications 1 à 13, caractérisé en ce que dans l'appendice (15) est insérée une garniture d'étanchéité (53) périphérique, qui lorsque l'appendice (15) est pressé sur une surface, enferme aussi la zone de la ligne (15) ressortant du boîtier (12).

15. Interrupteur électrique selon l'une des revendications 1 à 14, caractérisé en ce que l'appendice (15) et le capuchon (17) sont pourvus de nervures de renfort (55).
